(19) Europäisches Patentamt

European Patent Office

Office européen des brevets

(11) **EP 2 512 652 B1**

(12) **EUROPEAN PATENT SPECIFICATION**

(45) Date of publication and mention of the grant of the patent:
**21.03.2018 Bulletin 2018/12**

(21) Application number: **10798657.2**

(22) Date of filing: **09.12.2010**

(51) Int Cl.:
*B01J 20/20* (2006.01)    *B01J 20/28* (2006.01)
*B01J 20/26* (2006.01)    *B01J 20/30* (2006.01)
*B01J 20/32* (2006.01)    *C02F 1/28* (2006.01)
*C02F 1/62* (2006.01)    *B01D 39/20* (2006.01)

(86) International application number:
**PCT/US2010/059635**

(87) International publication number:
**WO 2011/081820 (07.07.2011 Gazette 2011/27)**

(54) **METHOD FOR PRODUCING AN ACTIVATED CARBON COATED WITH CATIONIC POLYMER**

VERFAHREN ZUR HERSTELLUNG EINER MIT KATIONISCHEM POLYMER BESCHICHTETEN AKTIVKOHLE

PROCÉDÉ DE FABRICATION D'UN CHARBON ACTIF REVETÛ DE POLYMÈRE CATIONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2009 US 286180 P**

(43) Date of publication of application:
**24.10.2012 Bulletin 2012/43**

(73) Proprietor: **Helen of Troy Limited**
**St. Michael (BB)**

(72) Inventors:
• **PEARKS, Andrew, Thomas**
**Cincinnati**
**Ohio 45213 (US)**
• **ONONYE, Aloysius, Ike**
**Loveland**
**Ohio 45140 (US)**
• **MITCHELL, Michael, Donovan**
**Cincinnati**
**Ohio 45251 (US)**
• **COLLIAS, Dimitris, Ioannis**
**Mason**
**Ohio 45040 (US)**
• **BJORKQUIST, David, William**
**Olympia**
**Washington 98502 (US)**
• **BEERSE, Peter, William**
**Morrow**
**Ohio 45152 (US)**

(74) Representative: **Moore, Michael Richard et al**
**Keltie LLP**
**No.1 London Bridge**
**London SE1 9BA (GB)**

(56) References cited:
**WO-A2-2006/110632**    **US-A- 4 765 923**
**US-A1- 2008 105 611**

EP 2 512 652 B1

**Description**

TECHNICAL FIELD

The present invention is generally directed to water filters and methods of producing potable water, and is specifically directed to water filters comprising activated carbon with a polymeric coating and methods of making same.

BACKGROUND

Fluid contaminants, particularly contaminants in water, may include various elements and compositions such as heavy metals (e.g., lead), microorganisms (e.g., bacteria, viruses), acids (e.g., humic acids), or any contaminants listed in NSF/ANSI Standard No. 53. As used herein, the terms "microorganism", "microbiological organisms", "microbial agent", and "pathogen" are used interchangeably. These terms, as used herein, refer to various types of microorganisms that can be characterized as bacteria, viruses, parasites, protozoa, and germs. In a variety of circumstances, these contaminants, as set forth above, must be removed before the water can be used. For example, in many medical applications and in the manufacture of certain electronic components, extremely pure water is required. As a more common example, any harmful contaminants must be removed from the water before it is potable, i.e., fit to consume. While filtering is conducted in some industrial/municipal water treatment systems, these filters may not be suitable for and/or achieve the removal performance suitable or required for use in consumer-friendly water filtering applications, e.g. household and personal use filter applications, and/or to produce potable water. As a result, there is a continual need for filters with improved removal capability of contaminants.

WO 2006/110632 and US 2008/0105611 describe filters and filter materials for providing or treating potable water. The filter material comprises activated carbon filter particles, at least a portion of which are coated with a cationic polymer.

SUMMARY

The invention provides a method for producing a coated activated carbon. The method comprises the steps of providing activated carbon particles having an average particle size up to 100 $\mu$m, and coating the activated carbon particles by spraying droplets of a cationic polymer solution onto the surface of the activated carbon particles, wherein the cationic polymer solution comprises 2 to 8% by weight cationic polymer and the droplet size is between 15 $\mu$m and 55 $\mu$m.

These and additional objects and advantages provided by the embodiments of the present invention will be more fully understood in view of the following detailed description, in conjunction with the drawings.

BRIEF DESCRIPTION OF THE DRAWINGS

The following detailed description of specific embodiments of the present invention can be best understood when read in conjunction with the drawings enclosed herewith.

FIGS. 1A and 1B are Secondary Ion Mass Spectrometry (SIMS) micrographs depicting the location of carbon particle ions and cationic polymer ions, respectively, when spray coating a 12% by weight pDADMAC solution having a 80-120 $\mu$m droplet size on the activated carbon;

FIGS. 2A and 2B are SIMS micrographs depicting the location of carbon particle ions and cationic polymer ions, respectively, when spray coating a 4% by weight pDADMAC solution having a 20 $\mu$m droplet size on the activated carbon according to one or more embodiments of the present invention; and

FIG. 3 is a flow chart depicting a method of producing cationic coated activated carbon particles according to one or more embodiments of the present invention.

The embodiments set forth in the drawings are illustrative in nature and not intended to be limiting of the claimed invention. Moreover, individual features of the drawings and invention will be more fully apparent and understood in view of the detailed description.

DETAILED DESCRIPTION

The present disclosure relates to improved activated carbon filters comprising activated carbon particles with cationic polymer coatings thereon, and methods of making these coated activated carbon particles. Specifically, the embodiments of the present invention are directed to applying cationic polymer coatings in a manner which reduces elution. As used herein, "elution" means washing away at least a portion of the cationic polymer coating on the activated carbon particles upon the introduction of water. As the production of purified potable water is desirable, elution of cationic polymer into the water being filtered is undesirable. Consequently, the present methods optimize the coating homogeneity and quantity to minimize elution while maintaining microbial removal performance.

The activated carbon filters, which are described in detail below, are operable individually to remove contaminants such as heavy metals, humic acids, and/or microorganisms from fluids, or may be used in tandem to remove such contaminants more effectively and/or at an increased level. For example, the present filters are able to satisfy the EPA guide standard for microbiological purifiers, which recommend a 6 log bacteria RT reduction with a 4 log MS2 bacteriophage reduction. The water filters may be used in industrial and commercial applications as well as personal consumer applications, e.g., household and personal use applications. The water filter is operable to be used with various fixtures, appliances, or components familiar to one of skill in the art.

The carbon filters may comprise activated carbon particles, and may include various suitable compositions and structures. For example, the carbon filter may be a filter block containing activated carbon particles or powders compressed into a block structure. As used herein, the phrase "filter block" is intended to refer to a mixture of filter particles bound together to form a structure that is capable of filtering a liquid, for example water, air, hydrocarbons, and the like. As such a filter block may comprise filter particles, binder particles, and other particles or fibers for the removal of specific contaminants, such as lead, mercury, arsenic, etc. A filter block can vary in geometry and flow patterns. One of many contemplated current filter block making processes is a single cavity compression molding process using ohmic heating.

Alternatively, the carbon filter may comprise of loose bed of carbon particles with or without a binder. The activated carbon particles may be impregnated into any substrate media familiar to one of ordinary skill in the art, for example, nonwoven substrates. Moreover, the filters may also comprise other filter systems including reverse osmosis systems, ultra-violet light systems, ozone systems, ion exchange systems, electrolyzed water systems, and other water treatment systems known to those of ordinary skill in the art. Also, the filters may comprise pre-filters wrapped around the filter blocks to prevent the filter blocks from clogging with suspended particles. Furthermore, the filters may comprise indicator systems and/or shut-off systems to indicate to the consumer the remaining life/capacity of the filter and to shut-off the filter when the filter's remaining life/capacity is zero.

In accordance with a few exemplary embodiments, the activated carbon particles of the carbon filter may comprise carbons from a variety of sources, e.g., wood-based carbon, coconut carbon, or combinations thereof. Other sources, for example, suitable lignocellulose derived carbons, are contemplated herein. In some embodiments, it may be desirable to use mixtures of carbon particles to achieve a desired particle and pore size distribution. For example, wood based carbons, which are predominantly mesoporous (between 2 and 50 nm pore size) and coconut carbons, which are predominantly microporous (less than 2nm pore size), may be mixed together. Examples of such activated carbon particle structures and compositions are provided in U.S. Patent Nos. 7,316,323, 6,852,224, 6,827,854, 6,783,713, 6,733,827, 6,565,749, 6,423,224, 6,290,848, and U.S. Publication Nos. 20070080103, 20040159596, 20040232065, 20040129617, and 20040164018. As used herein, the phrase "median particle size" refers to the diameter of a particle below or above which 50% of the total volume of particles lies. This median particle size is designated as $D_{v,0.50}$. While many methods and machines are known to those skilled in the art for fractionating particles into discreet sizes, sieving is one of the easiest, least expensive and common ways to measure particle sizes and particle size distributions. An alternative preferred method for determining size distribution of particles is with light scattering. Further, the phrase, "particle span" is a statistical representation of a given particle sample and can be calculated as follows. First, the median particle size, $D_{v,0.50}$, is calculated as described above. Then by a similar method, the particle size that separates the particle sample at the 10% by weight fraction, $D_{v,0.10}$, is determined, and then the particle size that separates the particle sample at the 90% by volume fraction, $D_{v,0.90}$, is determined. The particle span is then equal to: $(D_{v,0.90} - D_{v,0.10})/D_{v,0.50}$. By way of example, the carbon filter may comprise activated carbon filter particles having a median particle size of less than about 100 $\mu$m, less than about 50 $\mu$m, less than about 40 $\mu$m, less than about 37.5 $\mu$m, or less than about 35 $\mu$m. Moreover, the filter particles may have a particle span from about 1.8 or less, about 1.5 or less, about 1.4 or less, and about 1.3 or less..

Additionally, the activated carbon may demonstrate a mesopore volume from about 0.5 ml/gm to about 0.7 ml/gm, and a total pore volume from about 1 ml/gm to about 1.5 ml/gm. Moreover, the activated carbon may include mesopores having a pore diameter from about 2 nm to about 50 nm, a particle size of about 30 $\mu$m diameter, and a span from about 1 to about 1.6, or from about 1.3 to about 1.4. As used herein, the term "mesopore" is intended to refer to an intra-particle pore having a width or diameter between 2 nm and 50 nm (or equivalently, between 20 Å and 500 Å). As used herein, the phrase "mesopore volume" refers to the volume of all mesopores.

In accordance with the invention, the activated carbon particles are coated with a cationic polymer. Exemplary cationic polymers for use in the present invention are selected from the group consisting of: poly(N-methylvinylamine), polyallylamine, polyallyldimethylamine, polydiallylmethylamine, polydiallyldimethylammonium chloride (pDADMAC), polydiallyldimethylammonium trifluoromethanesulfonate (pDADMAT), polydiallyldimethylammonium nitrate (pDADMAN), polydiallyldimethylammonium perchlorate (pDADMAP), polyvinylpyridinium chloride, poly(2-vinylpyridine), poly(4-vinylpyridine), polyvinylimidazole, poly(4-aminomethylstyrene), poly(4-aminostyrene), polyvinyl(acrylamide-co-dimethylaminopropylacrylamide), polyvinyl(acrylamide-co-dimethyaminoethylmethacrylate), polyethyleneimine, polylysine, DAB-Am and PAMAM dendrimers, polyaminoamides, polyhexamethylenebiguandide, polydimethylamine-epichlorohydrine, aminopropyltriethoxysilane, N-(2-aminoethyl)-3-aminopropyltrimethoxysilane, N-trimethoxysilylpropyl-N,N,N-trimethylammonium chloride, bis(trimethoxysilylpropyl)amine, chitosan, grafted starch, the product of alkylation of polyethyleneimine by methylchloride, the product of alkylation of polyaminoamides with epichlorohydrine, cationic polyacrylamide with cationic monomers, dimethyl aminoethyl acrylate methyl chloride (AETAC), dimethyl aminoethyl methacrylate methyl chloride (METAC), acrylamidopropyl trimethyl ammonium chloride (APTAC), methacryl amodopropyl trimethyl ammonium chloride (MAPTAC), diallyl dimethyl ammonium chloride (DADMAC), ionenes, silanes and mixtures thereof. Preferably the cationic polymers are selected from the group consisting of: polyaminoamides, polyethyleneimine, polyvinylamine, polydiallyldimethylammonium chloride (pDADMAC), polydimethylamine-epichlorohydrin, polyhexamethylenebiguanide, poly-[2-(2-ethoxy)-ethoxyethlyl-guanidinium] chloride.

While many cationic polymers are contemplated for use in the coating, the cationic polymer may, in one embodiment, comprise polydiallydimethylammonium chloride (pDADMAC) alone or in combination with one or more cationic polymers. Cationic polymer solutions may comprise about 1% to about 15% by weight cationic polymer, or about 2% to about 8% by weight cationic polymer, or specifically about 2% by weight cationic polymer. In accordance with the claimed invention the cationic polymer solution comprises from 2% to 8% by weight cationic polymer. After drying, the pDADMAC may comprise from about 1% to about 4% by weight, or about 2% by weight, of the pDADMAC coated carbon. Additionally, it has also been discovered that the molecular weights for the pDADMAC polymer, which are dependent in part on the degree of polymerization of the DADMAC, impacts the efficacy of the pDADMAC coating. For example, it has been found that a pDADMAC polymer with a weight average molecular weight (Mw) up to about 200,000 g/mol and a number average molecular weight (Mn) of up to about 100,000 g/mol is superior to a pDADMAC polymer with a Mw from about 300,000 g/mol to about 500,000 g/mol of the polymer and a Mn of from about 150,000 g/mol to about 300,000 g/mol. With a larger polymer chain, there is more likelihood of overcoating of pDADMAC on the carbon particle surface, which may result in elution.

Additionally, the carbon filters may include organic binders, inorganic binders, or combinations thereof One example of a suitable binder is a polyethylene binder. Moreover, although the carbon block filter is effective for removal of all types of fluid contaminants, it may be desirable to utilize an additional heavy metal removal composition. For, example, amorphous titanium silicate (ATS) is highly effective as a lead adsorbent. Other suitable heavy metal removal components are contemplated herein. It is also contemplated to use additional components, such as ion exchange resins, additional sorbents, or combinations thereof.

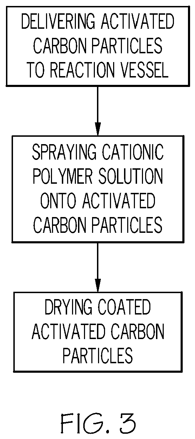

Embodiments of the invention, for example, as shown in FIG. 3, are directed to improved methods for applying the cationic coating to the activated carbon particles. As stated above, the activated carbon particles may comprise various sizes depending on the contaminants sought to be removed. In one embodiment, the activated carbon particles comprise an average particle size up to about 100 $\mu$m, or between 20 $\mu$m to 80 $\mu$m, or between about 30 $\mu$m to 40 $\mu$m. As used herein, "average particle size", refers to the mean or average diameter for the total volume of particles. The activated carbon particles may be coated by spraying droplets of a cationic polymer solution onto the surface of the activated carbon particles. Droplets may comprise a size of between about 5 $\mu$m to about 100 $\mu$m, or about 15 $\mu$m to about 55 $\mu$m, or about 20 $\mu$m to about 30 $\mu$m. In accordance with the claimed invention the droplets of cationic polymer solution comprise a size between 15 $\mu$m and 55 $\mu$m. By reducing the droplet size, the cationic coating is distributed more uniformly and homogeneously on the activated carbon particles, which thereby minimizes elution of the cationic polymer.

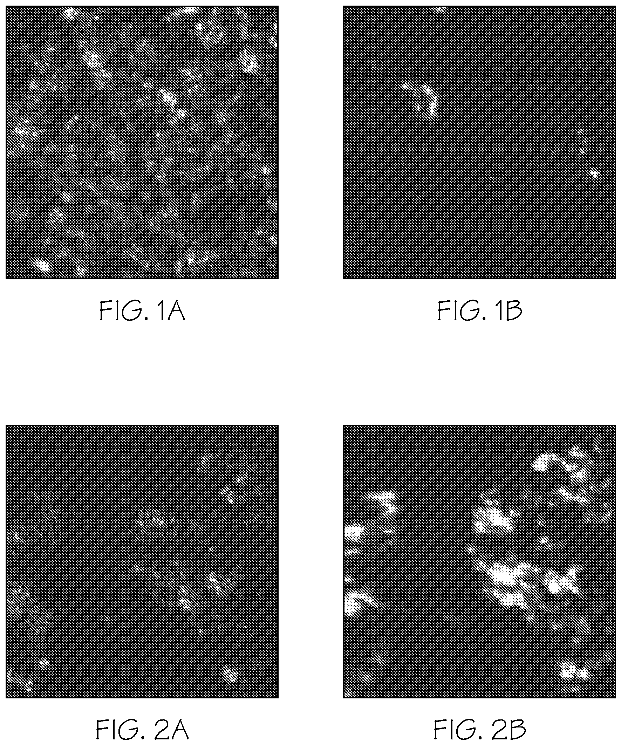

FIGS. 1A-2B show comparative secondary ion mass spectrometry (SIMS) images of coated activated carbon particles. For FIGS. 1A-1B and 2A-2B, the activated carbon particles comprise median particle sizes of 36 and 35 microns, respectively. FIGS. 1A-2B show coated activated carbon particles produced by spraying a 12% by weight pDADMAC solution via 80-120 $\mu$m droplets (FIGS. 1A and 1B) and images of coated activated carbon particles produced by spraying 4% by weight pDADMAC solution via 20 $\mu$m droplets (FIGS. 2A and 2B) in accordance with one or more embodiments of the present invention. Referring to FIG. 1A and 1B, the image on the left is a map of $C_2$ ions specific to coated carbon particles, and the image on the right is a map of chloride ions specific to the polymer. As shown in FIGS. 1A-1B, the field of carbon particles (FIG. 1A) demonstrates very little correspondence with the polymer field (FIG.1B), which demonstrates presence of polymer. In contrast, FIGS. 2A and 2B show a close match between locations of carbon (FIG. 2A) and polymer (FIG. 2B). Both sets of images reveal a 500 x 500 $\mu$m field of view and are representative of several different images taken of both samples of coated carbon. The cationic polymer solution may comprise any suitable solvent familiar to one of ordinary skill in the art, for example, water, an alkyl alcohol, or combinations thereof. By diluting the amount of cationic polymer in the cationic polymer solution, polymer mobility is increased and it gives the polymer chains room to stretch out, therefore strengthening the mechanism of binding between cationic polymer and activated carbon particle. Dilution also increases spray time, providing a longer residence time in the mixer, thereby maximizing attachments of the cationic polymer. By maximizing the attachments of cationic polymer, the elution of the cationic polymer was diminished.

Various devices and reaction mechanisms are contemplated for the spray coating of the cationic polymer. For example, the carbon particles may be placed in any suitable reaction vessel, for example, a plow mixer, a stationary or moving bed reactor, a fluidizedbed reactor, etc. To deliver the cationic polymer, the reaction vessel must be coupled to or in communication with a spray coating device. For example, the reaction vessel may comprise a nozzle port, which allows spray delivery of the cationic coating into the reaction vessel. The spraying time may range from about 30 seconds up to several hours depending on the amount of cationic polymer solution delivered and the amount of coating desired on the activated carbon particles. One suitable commercial embodiment is the Littleford FM-130 plow mixer with a nozzle port. While many spray coating systems suitable for coupling to the nozzle port of the reaction vessel, one suitable commercial device is the SUN13 two-fluid nozzle produced by Spraying Systems. Other suitable commercial devices include the SUE 15 and SUE 25 commercial nozzles produced by Spraying Systems. The SUN 13 is an internal mixing nozzle wherein the cationic coating solution and the air, which shears the liquid solution to produce droplets, are mixed inside the spray nozzle. The SUE 15 and SUE 25 commercial nozzles are external mixing nozzles wherein the air and cationic solution mix after exiting the nozzle. The coating step may be conducted at an air pressure at the nozzle of about 414 kPa (60 psi) to about 620 kPa (90 psi). Additionally, the coating step may be conducted with a liquid pressure at the nozzle of about 138 kPa (20 psi) to about 620 kPa (90 psi). The pressure within the reaction vessel is at or close to 1 atmosphere. In fact, the vessel may be vented during spray delivery to avoid pressurization.

After coating, the coated activated carbon particles may be dried. In one embodiment, the coated activated carbon particles may be dried in the same reaction vessel used for coating. For example, the plow mixer may be jacketed such that it is suitable for vacuum-drying. An atmospheric or non-vacuum oven, a ring dryer, or other suitable embodiments are also contemplated herein. Various drying temperatures and drying times are contemplated herein. For example, the drying may occur at a temperature sufficient to yield a product temperature of between about 50°C to about 150°C, or 70°C to about 100°C, or about 80°C. Drying times may vary, for example, from about 30 minutes to about 4 hours, or up to about 3 hours. In one exemplary embodiment, the drying may be conducted at a temperature of about 80°C for a time of about 3 hours or less. As discovered by the present inventors, if drying times and temperatures are not controlled, the temperature may cause the quaternary polymer to reduce to a tertiary state, resulting in degradation of the cationic charge with the release of a volatile byproduct, for example, methyl chloride.

As stated above, the present inventors have recognized that the stability of pDADMAC is at least partially temperature dependent. The adsorption of pDADMAC on granulated carbon yields a cationic polyelectrolyte on a predominantly hydrophobic surface, which may constitute an unstable state, especially at higher temperatures. As a result, pDADMAC may rearrange to eliminate the charge, thereby reducing from a quaternary polymer to a tertiary polymer and forming byproducts, such as methyl chloride. As discovered by the present inventors, replacing the chloride ion of the pDADMAC with a non-nucleophilic counterion may preclude this rearrangement, and thereby increase the temperature stability of the cationic coating. While various counterions are contemplated herein, e.g., nitrate, and perchlorate, the counterion may, in one exemplary embodiment, include trifluoromethanesulfonate instead of chloride. The pDADMAT is less likely to be reduced from the quaternary state at high temperatures.

To test the relationship between temperature and charge stability, experiments were conducted to measure the charge on the carbon due to adsorbed pDADMAC via Inverse IonExchange HPLC-UV. The carbon particles are packed in a small cartridge and connected as a column to a regular high pressure liquid chromatography (HPLC) column. The chloride counter ion of the quarternary nitrogen in pDADMAC is displaced by bromide which in turn is displaced by sulfate and analyzed versus standard bromide. The charge contributed by the pDADMAC may then be calculated using the charge equivalent % metric described below.

The Charge Equiv. % for pDADMAC is as follows

$$\text{Charge Equiv. \%pDADMAC} = \frac{\text{Sample Charge Response/mg}}{\text{Std RF per mg}} \text{ x \%Std pDADMAC}$$

wherein the standard response factor (Std RF) from all standard injections is

$$\text{Std RF/mg} = \frac{\text{UV Peak Area Response}}{40}$$ (The bromide standard is based on 40 mg equivalent coated carbon).

The sample charge response is

$$\text{Sample Charge Response/mg} = \frac{\text{UV Peak Area Response}}{\text{Sample Wt. (mg)}}$$

The value of the "%Std pDADMAC" is either "2" or "0.5", depending on whether one is analyzing a coated carbon powder or a filter containing coated carbon, respectively.

In two experimental examples as shown in Table 1 below, carbon samples coated with pDADMAC were subjected in duplicate to 80 °C, 120 °C, and 160 °C for 3 hour under vacuum. The carbon was coated at a target 2 wt% level with the actual sample measuring at about 1.8 wt%. The samples were then analyzed for charge by Inverse IE-HPLC versus standard bromide. The resulting charge was calculated as % charge equivalent pDADMAC as shown above. As shown below on Table 1, the control yielded a % charge equivalent pDADMAC of 1.81. Referring again to Table 1, no significant change was observed between 80 °C and 120 °C; however, at about 160 °C, there was greater than 50% loss of charge was observed to yield values of 0.81 and 0.72 in Experiments 1 and 2, respectively.

Table 1

| Sample | %Charge Equivalent Pdadmac |
|--------|----------------------------|
| Control | 1.81 |
| Experiment 1 | |
| 80 °C | 1.81 |
| 120 °C | 1.78 |
| 160 °C | 0.81 |
| Experiment 2 | |
| 80 °C | 1.76 |
| 120 °C | 1.76 |
| 160 °C | 0.72 |

As mentioned above, when the coated carbon is re-wetted a portion of the cationic polymer coating may elute. It was determined that elution is linked in part to coating level, since activated carbon particles that are "over-coated" (i.e., having an amount of polymer which exceeds some loading-capacity of the carbon surface) demonstrate more elution. Diluting the cationic polymer inside the cationic polymer solution and minimizing the droplet size yields improvements to elution and coating homogeneity. For example, the above described methods of applying the cationic coating minimizes elution of cationic polymer by at least 60%, and in further embodiments minimizes elution of cationic polymer by at least 90%, as compared to other conventional coating methods.

EXAMPLES

The experimental process described below targets a 2.0 wt% coating of a FL4440 (pDADMAC) solution on the RGC granular activated carbon, assuming a polymer solids concentration of about 36% in the raw FL4440 (pDADMAC) solution.

Table 2

| Target Wt% Coating | Mass of FL4440 (kg) | Mass of Water (kg) | Mass of RGC (kg) |
|--------------------|---------------------|--------------------|--------------------|
| 1.0 | 0.55 | 19.45 | 20.00 |
| 1.5 | 0.84 | 19.16 | 20.00 |
| 2.5 | 1.39 | 18.61 | 20.00 |
| 3.0 | 1.67 | 18.33 | 20.00 |

The raw materials were added into separate vessels: 18.9 kg of USP water and 1.1 kg of Floquat FL4440 were added into a mix tank, and 20.0 kg of RGC granular activated carbon was added into a Littleford FM-130D plow mixer. The polymer solution is mixed for 5 minutes and then pressurized to 138 - 172 kPa (20 - 25 psi) and then the polymer solution is delivered into a FM-130D mixer via a single SUE15 two-fluid atomization nozzle, which utilizes 414 - 620 kPa (60 - 90 psi) air. Under these spraying parameters, the SUE15 nozzle will deliver the solution in 20 $\mu$m droplets. The RGC granular activated carbon is mixed at a shaft rotational speed of about 80 RPM at room temperature during this coating phase. Once delivery of the solution is complete, a vacuum is pulled on the FM-130D mixer, and pressurized steam is applied to heat the mixer jacket to a temperature of approximately 140 °C, wherein the RGC continues to be mixed through a drying phase to target a product temperature of about 80°C. Once the product temperature indicates that the product is dry, the product is discharged from the mixer, and may be incorporated into a filter e.g., a filter block.

In an exemplary embodiment of producing a filter block, a mixer was filled with a powder blend consisting of 45% of the coated carbon, 36% of an activated coconut carbon from SAI Inc., 3% of an ATS lead adsorbent from Calgon Carbon, and 16% of a polyethylene binder. A portion of this mix was placed into molds and heated through resistance heating of the carbon at 8000J. The resultant block had a compression strength of 166 PSI. The resultant blocks were manufactured into water filter cartridges and tested against the EPA guide standard for microbiological purifiers. The blocks demonstrated a 7.05 log reduction of the bacteria RT and a 4.79 log reduction for the MS2 bacteriophage. In contrast, when the same experiment was conducted using 16000 kJ of energy, polymer degradation and a resultant loss in MS2 and the bacteria RT performance was noted. Specifically, the average log reduction of the Bacteria RT was 4.46, while the MS2 reduction dropped to 1.33.

It is further noted that terms like "preferably," "generally," "commonly," "desirably", and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

While particular embodiments of the present invention have been illustrated and described, it would be obvious to those skilled in the art that various other changes and modifications can be made without departing from the scope of the invention. It is therefore intended to cover all such changes and modifications that are within the scope of this invention as defined in the appended claims.

**Claims**

1. A method for producing a coated activated carbon comprising:

   providing activated carbon particles having an average particle size up to 100 μm; and
   coating the activated carbon particles by spraying droplets of cationic polymer solution onto the surface of the activated carbon particles,
   wherein the cationic polymer solution comprises 2% to 8% by weight cationic polymer and the droplet size is between 15 μm and 55 μm.

2. The method of claim 1 wherein the cationic polymer comprises polydiallyldimethylammonium chloride (pDADMAC), polydiallyldimethylammonium trifluoromethanesulfonate, (pDADMAT), or both.

3. The method of claim 2 wherein the pDADMAC polymer comprises a weight average molecular weight (Mw) of up to 200,000 g/mol and a number average molecular weight (Mn) of up to 100,000 g/mol.

4. The method of claim 1 wherein the cationic polymer solution comprises 2% to 4% by weight cationic polymer.

5. The method of claim 1 wherein the coating step is conducted at a liquid pressure of 138 kPa (20 psi) to 620 kPa (90 psi); or wherein the coating step is conducted at an air pressure of 138 kPa (20 psi) to 620 kPa (90 psi).

6. The method of claim 1 wherein the droplet size of the cationic polymer solution is between 20 μm and 30 μm.

7. The method of claim 1 further comprising drying the coated activated carbon particles.

8. The method of claim 7 wherein the drying occurs at a temperature between 70°C to 100°C.

**Patentansprüche**

1. Verfahren zum Herstellen einer beschichteten Aktivkohle, Folgendes umfassend:

Bereitstellen von Aktivkohlepartikeln mit einer durchschnittlichen Partikelgröße bis zu 100 $\mu$m; und
Beschichten der Aktivkohlepartikel durch Sprühen von Tröpfchen einer kationischen Polymerlösung auf die Oberfläche der Aktivkohlepartikel,
wobei die kationische Polymerlösung 2 Gew.-% bis 8 Gew.-% kationisches Polymer umfasst und die Tröpfchengröße zwischen 15 $\mu$m und 55 $\mu$m liegt.

2. Verfahren nach Anspruch 1, wobei das kationische Polymer Polydiallyldimethylammoniumchlorid (pDADMAC), Polydiallyldimethylammoniumtrifluormethansulfonat (pDADMAT) oder beides umfasst.

3. Verfahren nach Anspruch 2, wobei das pDADMAC-Polymer eine gewichtsgemittelte Molekülmasse (Mw) von bis zu 200.000 g/mol und eine zahlenmittlere Molekülmasse (Mn) von bis zu 100.000 g/mol umfasst.

4. Verfahren nach Anspruch 1, wobei die kationische Polymerlösung 2 Gew.-% bis 4 Gew.-% kationisches Polymer umfasst.

5. Verfahren nach Anspruch 1, wobei der Beschichtungsschritt bei einem Flüssigkeitsdruck von 138 kPa (20 psi) bis 620 kPa (90 psi) durchgeführt wird, oder wobei der Beschichtungsschritt bei einem Luftdruck von 138 kPa (20 psi) bis 620 kPa (90 psi) durchgeführt wird.

6. Verfahren nach Anspruch 1, wobei die Tröpfchengröße der kationischen Polymerlösung zwischen 20 $\mu$m und 30 $\mu$m liegt.

7. Verfahren nach Anspruch 1, ferner das Trocknen der beschichteten Aktivkohlepartikel umfassend.

8. Verfahren nach Anspruch 7, wobei das Trocknen bei einer Temperatur zwischen 70 °C und 100 °C erfolgt.

**Revendications**

1. Procédé pour produire un charbon actif revêtu comprenant :

la fourniture de particules de charbon actif ayant une taille de particule moyenne jusqu'à environ 100 $\mu$m ; et
le revêtement des particules de charbon actif en pulvérisant des gouttelettes de solution de polymère cationique sur la surface des particules de charbon actif,
dans lequel la solution de polymère cationique comprend 2 % à 8 % en poids de polymère cationique et la taille des gouttelettes est entre 15 $\mu$m et 55 $\mu$m.

2. Procédé selon la revendication 1, dans lequel le polymère cationique comprend du polychlorure de diallyldiméthylammonium (pDADMAC), du poly(trifluorométhanesulfonate de diallyldiméthylammonium), (pDADMAT), ou les deux.

3. Procédé selon la revendication 2, dans lequel le polymère pDADMAC comprend une masse moléculaire moyenne en masse (Mw) jusqu'à 200 000 g/mol et une masse moléculaire moyenne en nombre (Mn) jusqu'à environ 100 000 g/mol.

4. Procédé selon la revendication 1, dans lequel la solution de polymère cationique comprend 2 % à 4 % en poids de polymère cationique.

5. Procédé selon la revendication 1, dans lequel l'étape de revêtement est conduite à une pression liquide de 138 kPa (20 psi) à 620 kPa (90 psi); ou dans lequel l'étape de revêtement est conduite à une pression d'air de 138 kPa (20 psi) à 620 kPa (90 psi).

6. Procédé selon la revendication 1, dans lequel la taille des gouttelettes de la solution de polymère cationique est entre 20 $\mu$m et 30 $\mu$m.

7. Procédé selon la revendication 1, comprenant en outre le séchage des particules de charbon actif revêtues.

8. Procédé selon la revendication 7, dans lequel le séchage se produit à une température entre 70 °C et 100 °C.

FIG. 1A

FIG. 1B

FIG. 2A

FIG. 2B

DELIVERING ACTIVATED
CARBON PARTICLES
TO REACTION VESSEL

SPRAYING CATIONIC
POLYMER SOLUTION
ONTO ACTIVATED
CARBON PARTICLES

DRYING COATED
ACTIVATED CARBON
PARTICLES

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006110632 A
- US 20080105611 A
- US 7316323 B
- US 6852224 B
- US 6827854 B
- US 6783713 B
- US 6733827 B
- US 6565749 B
- US 6423224 B
- US 6290848 B
- US 20070080103 A
- US 20040159596 A
- US 20040232065 A
- US 20040129617 A
- US 20040164018 A